# EUROPÄISCHE PATENTSCHRIFT

(11) **EP 1 217 277 B1**
(45) Veröffentlichungstag und Bekanntmachung des Hinweises auf die Patenterteilung: **13.10.2004**
(21) Anmeldenummer: 01130157.9
(22) Anmeldetag: 19.12.2001
(51) Int. Cl.: F16L 3/26, H02G 3/04

(54) **Installationskanal**
Installation channel
Canal d'installation

(30) Priorität: 23.12.2000 DE 10065166
(43) Veröffentlichungstag der Anmeldung: 26.06.2002
(73) Patentinhaber: gabo Systemtechnik GmbH, 94559 Niederwinkling (DE)
(72) Erfinder: Schaarschmidt, Dieter H., 85716 Unterschleissheim (DE); Loibl, Christian, 94327 Bogen (DE)

(56) Entgegenhaltungen:
- EP-A- 0 007 203
- EP-A- 0 277 344
- WO-A-97/29623
- CH-A- 690 392
- DE-U- 9 311 700

## Beschreibung

Die Erfindung betrifft einen Installationskanal bestehend aus einem Gehäuse für die Verlegung von Leitungen für erwärmte Fließmedien, wie beispielsweise Heizleitungen oder dergl., in einem oberen Gehäuseteil, von Elektroleitungen in einem unteren, vom oberen Gehäuseteil ggfl. durch einen Trennsteg, wand oder dergl. abgeteilten Gehäuseteil und mindestens einer abnehmbaren Abdeckung.

Solche Installationskanäle, auch als Leitungskanäle bezeichnet, sind an sich bekannt. Sie bestehen im allgemeinen aus Kunststoff, dienen insbesondere zur Anbindung von warmetauschem und Elektrogeräten und werden meist als Sockelleisten in gewerblichen- und Wohnraumen verlegt. Diese Installationskanäle bestehen aus einem frontseitig abgedeckten und meist zweigeteilten Gehäuse, in dessen oberem Teil die mit einer höheren Temperatur beaufschlagten Rohrleitungen für erwärmte Fließmedien und in dessen unterem Teil die nur unter Belastung Verlustwärme abgebenden Elektroleitungen, Steckdosen usw., meist 230V Kabel für die Versorgung von Elektrogeräten, Antennenkabel, Telephonkabel, div. Steuerleitungen etc., verlegt sind. Die Elektrokabel dürfen unter Belastung gem. VDE- Richtlinie 0298 Teil 4 (02.1988) nur einer bestimmten Temperatur, etwa +30°C ausgesetzt werden, um einen einwandfreien Betrieb von angeschlossenen Verbrauchem, bei bestimmter Absicherung, zu gewährleisten. Um diese Betriebsbedingungen einzuhalten, d.h. einen Temperaturanstieg im unteren, die Elektroinstallation enthaltenden, Gehäuseteil auf unzulässig hohe Werte zu verhindern, sind bereits diverse Vorschläge veröffentlicht worden.

So zeigt die DE-U 93 11 700 einen solchen Leitungsführungskanal dessen wärmeabgebende Heizleitungen über ihre gesamte Länge im Leitungskanal isoliert sind, wobei beide Bereiche des Kanals durch einen Steg voneinander getrennt sind.

Die DE-U 94 17 832 dagegen schlägt einen anderen Weg vor, nämlich beide Kanalbereiche, also den oberen mit den Heizleitungen belegten mit dem unteren, die Elektrokabel führenden über wenigstens eine Hohlkammer miteinander zu verbinden. In die Hohlkammer/n kann auch zusätzlich Isoliermaterial eingebracht werden. Damit soll ein Ansteigen der Temperatur im unteren, die Elektrokabel führenden, Kanalbereich auf über 25°C verhindert werden.

Auch die DE 295 21 219 U1 schlägt einen solchen Leitungskanal vor, der die Temperatur im unteren Kanalbereich 30°C nicht übersteigen lassen soll.

Die CH-A 690 392 zeigt zwar Ventilationsöffnungen am Gehäuse für den Durchtritt von Luft; allerdings liegen die Elektroleitungen in einem oberen Gehäuseteil, während sich eine Heizleitung in einem unteren Gehäuseteil wiederfindet. Bedingt durch die thermische Konvektion steigt die erwärmte Luft von der Heizleitung nach oben in Richtung der Elektroleitungen, so dass auch hier nicht auf eine gesonderte Wärmeisolation verzichtet werden kann.

Sämtlichen vorgenannten Lösungen ist gemeinsam, dass beide Kanalbereiche thermisch voneinander isoliert sein sollen. Eine Beeinflussung des unteren, temperatursensiblen Kanalbereiches, d.h. ein Temperaturanstieg auf unzulässig hohe Werte, soll damit vermieden werden.

Es liegt auf der Hand, dass dies durch die vorgeschlagenen Maßnahmen nicht erreichbar ist, jedenfalls nicht im Dauerbetrieb. Für eine kurze Zeitspanne mag es zutreffen, daß die Temperatur im unteren Kanalbereich nicht wesentlich ansteigt, über einen längeren Zeitraum, vor allem über eine Heizperiode z.B. jedoch nicht. Es wird sich in jedem Fall, physikaüsch bedingt, ein Temperaturausgleich zwischen den beiden Kanalbereichen, trotz relativer gegenseitiger Abschottung, einstellen. Bei einem Leitungskanal dieser Art handelt es sich um ein geschlossenes System, in dem ein Temperaturausgleich auf Dauer nicht zu verhindern ist.

Hier setzt die Erfindung ein.

Der Erfindung, wie sie in den Ansprüchen beschrieben ist, liegt die Aufgabe zugrunde, den sich einstellenden Temperaturausgleich in einem Installationskanal der vorbeschriebenen Art weitgehend zu verhindern und den die Elektrokabel führenden unteren Kanalbereich vor unzulässigen Temperaturerhöhungen zu bewahren, wobei der Installationskanal bei Montage in Wohnräumen ein ansprechendes Äußeres aufzuweisen hat.

Die mit der Erfindung erzielten Vorteile liegen insbesondere darin, dass die von den im oberen Kanalbereich verlegten sogen. Heizleitungsrohren, also Vor- und Rücklauf von Wärmetauschern unterschiedlichster Art, abgegebene Wärme durch die Lüftungsöffnungen, -schlitze, oder dergl. abzufahren, anstatt einen Wärmestau in diesem Kanalbereich zu erzeugen und Maßnahmen zu ergreifen, um eine Beeinflussung der Elektrokabel des unteren Kanalbereiches durch zu hohe Temperaturwerte zu verhindern. Ein weiterer Vorteil liegt darin, dass der Trennsteg zwischen oberem und unteren Kanalbereich u.U. völlig entfallen kann, bzw. dessen Abmessungen auf die tatsächlichen statischen Erfordemisse reduziert werden können und die im oberen Kanalbereich auftretende Wärme vor allem über die Rückwand des oberen Kanalbereiches entweichen kann.

Die Erfindung ist nachstehend anhand eines in den Abbildungen dargestellten Ausführungsbeispieles näher erläutert.

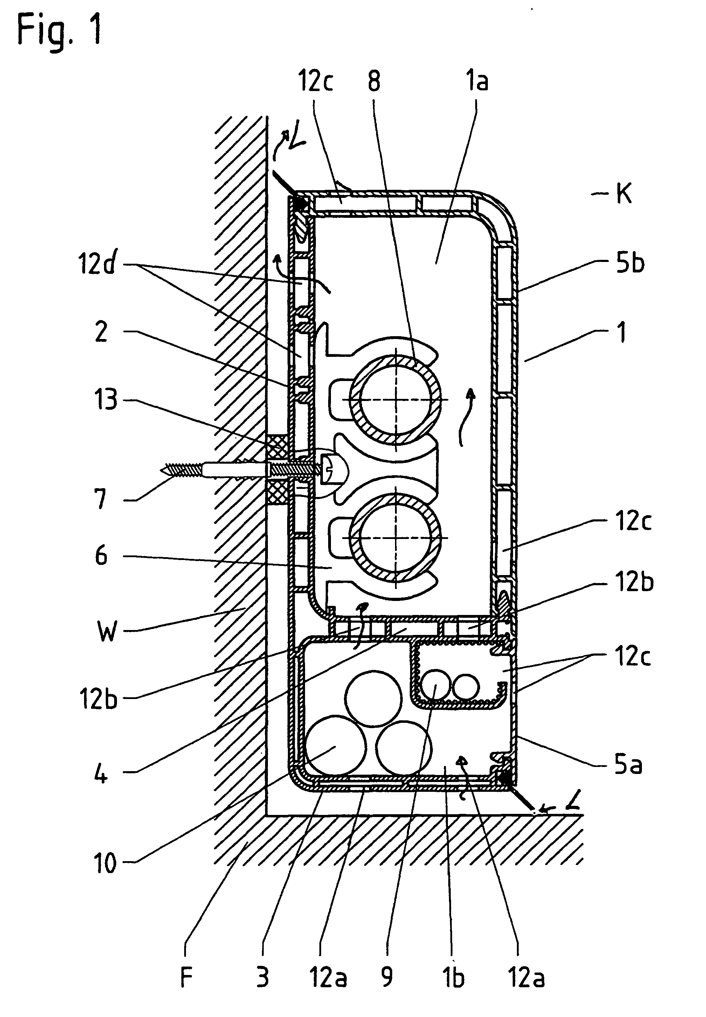

Es zeigt
Fig. 1 einen Schnitt durch einen erfindungsgemäßen Installationskanal und

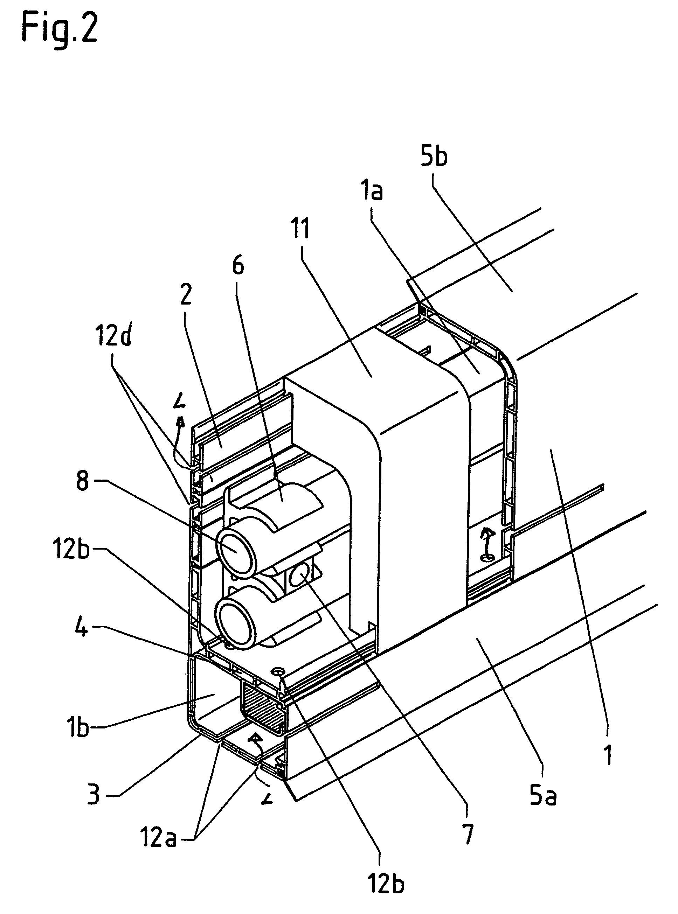

Fig. 2 eine perspektivische Darstellung der Fig. 1.

Der in den Abbildungen dargestellte Installationskanal K besteht im wesentlichen aus einem Gehäuse 1 mit Rückwand 2, Boden 3, einem Trennsteg 4 zwischen dem oberen und dem unteren Gehäuseteil 1a,1b und mindestens einer Frontabdeckung 5, ggfl. sind zwei solche Abdeckungen 5a,5b vorgesehen, um beide Gehäuseteile 1a, 1b unabhängig voneinander zugänglich zu machen. Die Frontabdeckungen sind dabei mit dem Gehäuse 1 auf bekannte Weise verrastet.

Im oberen Gehäuseteil 1a sind in Rohrhafterungen 6 verlegte Rohrleitungen 8, beispielsweise Heizleitungen mit Vor- und Rücklauf 8a,8b vorgesehen, während im unteren Gehäuseteil 1b verschiedene Elektroleitungen, wie z.B. Telephon- und Steuerleitungen 9, Starkstromkabel 10 usw. verlegt sind. Anschlußdosen für die Elektroleitungen sind mit 11 bezeichnet.

Der Installationskanal ist mit der Rückwand 2 seines Gehäuses 1 vorzugsweise unter Zwischenschaltung einer Abstandsleiste, bzw., je nach Länge des Installationskanales, mehrerer Abstandshalter 13, mittels Befestigungsmitteln 7 an einer Wand W oder dergl. befestigt. Vom Fußboden F sollte der Installationskanal vorteilhafterweise durch einen Luftspalt getrennt sein.

Das Gehäuse 1 ist an mehreren Stellen mit Ventilationsöffnungen 12 versehen, um eine Ventilation desselben und somit Wärmeabfuhr zu gewährleisten. Auf diese Weise wird der sonst unvermeidliche Temperaturanstieg, vor allem im oberen Gehäuseteil 1a, hervorgerufen durch die Rohrleitungen 8, die ein erwärmtes Fließmedium führen, vermieden. Die Temperatur im unteren Gehäuseteil 1b kann somit nicht mehr auf unzulässig hohe Werte ansteigen, da die erwärmte Luft im oberen Gehäuseteil 1a nach oben, vor allem durch die rückwärtigen Ventilationsöffnungen 12d, abgeführt wird. Die im oberen Gehäuseteil 1a auftretende Erwärmung teilt sich dem unteren Gehäuseteil und damit den wärmeempfindlichen Elektroleitungen nicht mehr mit.

Der Eintritt kühlerer Raumluft L erfolgt durch die Ventilationsöffnungen 12a im Boden 3 des Gehäuses 1 zunächst in den unteren Gehäuseteil 1b, sie streicht dann durch die Ventilationsöffnungen 12b im Trennsteg 4 nach oben in den oberen Gehäuseteil 1a um, dort erwärmt, das Gehäuse durch die Ventilationsöffnungen 12d in der Rückwand 2 des Gehäuses 1 wieder zu verlassen, wodurch von unten wieder kühlere Luft L nachströmt. Die Abstandshalter 13 sind dabei unterhalb der obersten Ventilationsöffnung 12d vorgesehen.

Ventilationsöffnungen 12 können, außer im Boden 3 (12a) des Gehäuses 1, dem aus stabilitätsgründen meist vorhandenen Trennsteg 4 (12b) und der Rückwand 2 (12d), auch in der Frontabdeckung 5a,b (12c) vorgesehen sein. Um zu verhindern, daß Schmutz, Wasser oder dergl. durch diese Ventilationsöffnungen in das Innere des Gehäuses 1 gelangen kann, sollten diese Ventilationsöffnungen in der Frontabdeckung mittels einer Haube oder dergl. abgedeckt sein. Ist kein Trennsteg 4 zwischen oberen und unteren Gehäuseteil 1a,1b vorgesehen, entfallen selbstverständlich auch die Ventitationsöffnungen. Außerdem kann der Luftein- bzw. Luftauslaß durch eine andere Ausbildung werden Rasten zwischen den Frontabdeckungen 5a,5b und dem Trennsteg 4, bzw. dem Boden 3 und der Rückwand 2 des Gehäuses 1 erfolgen.

Die in einem solchen Installationskanal K, der meist aus einem thermoplastischen Kunststoff besteht, verlegten, erwärmte Fließmedien führenden, Rohrleitungen 8 benötigen keinerlei besondere Wärmeisolation mehr gegenüber den im unteren Gehäuseteil 1b verlegten Elektrokabeln 9,10.

### Bezugszeichenliste

- F: Fußboden
- K: Installationskanal
- W: Wand
- 1: Gehäuse
- 1a: Gehäuseoberteil
- 1b: Gehäuseunterteil
- 2: Gehäuserückwand
- 3: Gehäuseboden
- 4: Trennsteg
- 5a: Frontabdeckung
- 5b: Frontabdeckung
- 6: Rohrhalter
- 7: Befestigungsmittel
- 8: Installationsrohre
- 9: Schwachstromleitungen
- 10: Starkstromleitungen
- 11: Anschlußdosen
- 12: Ventilationsöfnungen
- 13: Abstandshalter

## Patentansprüche

1. Installationskanal (K), bestehend aus einem Gehäuse (1) für die Verlegung von Leitungen (8) für erwärmte Fließmedien, wie beispielsweise Heizleitungen oder dergl., in einem oberen Gehäuseteil (1a), von Elektroleitungen (9,10) in einem unteren, vom oberen Gehäuseteil ggfl. durch einen Trennsteg (4), -wand oder dergl. abgeteilten Gehäuseteil (1b) und mindestens einer abnehmbaren Abdeckung (5), **dadurch gekennzeichnet, dass** das Gehäuse (1) mit Ventilationsöffnungen (12) für den Durchtritt von Luft (L) versehen ist.

2. Installationskanal (K) nach Anspruch 1, **dadurch gekennzeichnet, dass** der Boden (3), der Trennsteg (4) und die Rückwand (2) des Gehäuses (1) mit Ventilationsöffnungen (12) versehen sind.

3. Installationskanal (K) nach Anspruch 1 und 2, **dadurch gekennzeichnet, dass** der Trennsteg (4) des Gehäuses (1) mit Ventilationsöffnungen (12b) versehen ist.

4. Installationskanal (K) nach Anspruch 1 bis 3, **dadurch gekennzeichnet, dass** mindestens die Abdeckung (5a) des Gehäuses (1) mit Ventilationsöffnungen (12c) versehen ist.

5. Installationskanal (K) nach Anspruch 1 bis 4, **dadurch gekennzeichnet, dass** sichtbare Ventilationsöffnungen (12d) mit einer Haube versehen sind.

6. Installationskanal (K) nach Anspruch 1 und einen der folgenden, **dadurch gekennzeichnet**, da**ß** zumindest der Trennsteg (4) und die Rückwand (2) des Gehäuses (1) mit Ventilationsöffnungen (12b,d) versehen sind.

7. Installationskanal (K) nach Anspruch 1 und einen der folgenden, **dadurch gekennzeichnet, daß** zwischen dessen Rückwand (2) des Gehäuses (1) und der Montagewand (W) Abstandshalter (13) vorgesehen sind.

8. Installationskanal (K) nach Anspruch 1 und einen der folgenden, **dadurch gekennzeichnet**, da**ß** der Boden (1c) des Gehäuses (1) vom Fußboden (F) in geringem Abstand montiert ist.

9. Installationskanal (K) nach Anspruch 1 und einen der folgenden, **dadurch gekennzeichnet**, da**ß** das Gehäuse (1) aus Kunststoff besteht.

## Claims

1. Installation duct (K), consisting of a housing (1) for the installation of pipes (8) for heated liquid media, for example heating pipes or the like, in an upper part of the housing (1a), and of electric cables (9,10) in a lower part of the housing (1 b) separated if required by a separating bridge (4), wall or the like, and at least one removable cover (5), **characterised in that** the housing (1) is provided with ventilation openings (12) for the passage of air (L).

2. Installation duct (K) in accordance with Claim 1, **characterised in that** the base (3), the separating bridge (4) and the rear wall (2) of the housing (1) are provided with ventilation openings (12).

3. Installation duct (K) in accordance with Claims 1 and 2, **characterised in that** the separating bridge (4) of the housing (1) is provided with ventilation openings (12b).

4. Installation duct (K) in accordance with Claims 1 to 3, **characterised in that** at least the cover (5a) of the housing (1) is provided with ventilation openings (12c).

5. Installation duct (K) in accordance with Claims 1 to 4, **characterised in that** visible ventilation openings (12d) are provided with a hood.

6. Installation duct (K) in accordance with Claim 1 and one of the subsequent Claims, **characterised in that** at least the separating bridge (4) and the rear wall (2) of the housing (1) are provided with ventilation openings (12b, d).

7. Installation duct (K) in accordance with Claim 1 and one of the subsequent Claims, **characterised in that** spacers (13) are provided for between the rear wall (2) of the housing (1) and the mounting wall (W).

8. Installation duct (K) in accordance with Claim 1 and one of the subsequent Claims, **characterised in that** the base (1c) of the housing (1) is mounted a short distance from the floor (F).

9. Installation duct (K) in accordance with Claim 1 and one of the subsequent Claims, **characterised in that** the housing (1) is made of plastic.

## Revendications

1. Canal d'installation (K), composé d'un boîtier (1) destiné à la pose de conduites (8) pour milieux d'écoulement réchauffés, comme par exemple des conduites de chauffage ou conduites similaires, dans une partie de boîtier supérieure (1 a), de lignes électriques (9, 10) dans une partie de boîtier inférieure (1 b) séparée de la partie de boîtier supérieure, le cas échéant, par une cloison de séparation (4), paroi de séparation ou dispositif similaire, et d'au moins un couvercle (5) amovible, **caractérisé par le fait que** le boîtier (1) est doté d'orifices de ventilation (12) pour le passage de l'air (L).

2. Canal d'installation (K) selon la revendication 1, **caractérisé par le fait que** le fond (3), la cloison de séparation (4) et la paroi arrière (2) du boîtier (1) sont dotés d'orifices de ventilation (12).

3. Canal d'installation (K) selon les revendications 1 et 2, **caractérisé par le fait que** la cloison de séparation (4) du boîtier (1) est dotée d'orifices de ventilation (12b).

4. Canal d'installation (K) selon les revendications 1 à 3, **caractérisé par le fait qu'**au moins le couvercle (5a) du boîtier (1) est doté d'orifices de ventilation (12c).

5. Canal d'installation (K) selon les revendications 1 à 4, **caractérisé par le fait que** les orifices de ventilation visibles (12d) sont dotés d'un capot.

6. Canal d'installation (K) selon les revendications 1 et l'une des suivantes, **caractérisé par le fait qu'**au moins la cloison de séparation (4) et la paroi arrière (2) du boîtier (1) sont dotées d'orifices de ventilation (12b, d).

7. Canal d'installation (K) selon les revendications 1 et l'une des suivantes, **caractérisé par le fait qu'**entre la paroi arrière (2) du boîtier (1) et le mur de montage (W), des entretoises (13) sont prévues.

8. Canal d'installation (K) selon les revendications 1 et l'une des suivantes, **caractérisé par le fait que** le fond (1c) du boîtier (1) est monté avec un faible écartement par rapport au plancher (F).

9. Canal d'installation (K) selon les revendications 1 et l'une des suivantes, **caractérisé par le fait que** le boîtier (1 ) est en plastique.
